# EUROPÄISCHE PATENTSCHRIFT

(11) **EP 2 607 534 B1**
(45) Veröffentlichungstag und Bekanntmachung des Hinweises auf die Patenterteilung: **08.06.2016**
(21) Anmeldenummer: 11194835.2
(22) Anmeldetag: 21.12.2011
(51) Int. Cl.: D04H 1/541, D04H 3/147, F28F 21/02

(54) **Wärmeleitender Formkörper und Verfahren zu seiner Herstellung**
Thermally conductive body and method for its production
Corps à conduction thermique haute et son procédé de fabrication

(43) Veröffentlichungstag der Anmeldung: 26.06.2013
(73) Patentinhaber: Zehnder Group International AG, 5722 Gränichen (CH)
(72) Erfinder: Kriesi, Ruedi, Dr., 8820 Wädenswil (CH)
(74) Vertreter: Stenger Watzke Ring

(56) Entgegenhaltungen:
- DE-A1- 10 341 255
- JP-A- 5 230 751
- US-A- 4 946 738

## Beschreibung

Die vorliegende Erfindung betrifft einen wärmeleitenden Formkörper und das Verfahren zur Herstellung eines wärmeleitenden Formkörpers.

Wärmeleitende Formkörper werden beispielsweise in der Heizungstechnik zum Zwecke einer besseren flächigen Wärmeverteilung eingesetzt. Beispielsweise werden im Radiatorbereich Metallplatten verwendet. Diese, wie alle wärmeleitenden Materialien, haben in der Regel den Nachteil, dass die Wärme nicht gleichmäßig verteilt wird. An den Stellen, an denen Wärme eingeleitet wird, sind diese Formkörper in der Regel am heißesten und weisen eine von da an stetig abnehmende Temperatur auf.

Aus der JP 523051A ist ein Verfahren bekannt, in dem Bikomponentenfasern mit anderen Fasern im schüttfähigen Zustand gemischt werden. Diese Mischung wird in eine Form eingebracht und zugleich gepresst und erwärmt. Bei diesem Heißpressschritt schmelzt das Polymer der Außenseite der Bikomponentenfaser. Der Formkörper wird hierdurch intern vernetzt. Der Formkörper wird hierdurch intern vernetzt. Der Formkörper kann nach der vorbeschriebenen Herstellung auf einer Oberfläche beschichtet und nachvernetzt werden.

Die US 4,946,738 A zeigt ein Verfahren, in dem 1 bis 5 Gew.-% Bikomponentenfasern mit anderen Fasern in schüttfähigem Zustand gemischt werden. Diese Mischung wird in eine Form eingebracht und gepresst. Danach wird der Formkörper der Schmelzen des Polymers der Außenseite der Bikomponentenfasern bei 126 bis 150°C intern vernetzt.

Den beiden vorbeschriebenen Verfahren ist es gemein, dass sowohl die mechanische Stabilität der jeweiligen Formkörper als auch die Wärmeleitfähigkeit vergleichsweise gering sind.

Aus der DE 103 41 255 ist Blähgraphit bekannt, welcher über eine gute Wärmeverteilfähigkeit im Zusammenhang mit einer guten Wärmeleitfähigkeit verfügt Es wurde daher vorgeschlagen, Heizmedium führende Rohre in dieses Material einzulegen, um auch bei größeren Rohrabständen eine gleichmäßige Oberflächentemperatur und einen entsprechenden guten Wärmeaustausch mit der Umgebung zu erzielen. Bei hoher Temperatur bilden sich aus dem Ausgangsprodukt lange Fasern, die maßgeblich für die Wärmeleitfähigkeit sind. Dieses Material hat den Nachteil, dass die Herstellung formstabiler Körper schwierig ist, da diese keine gute Festigkeit aufweisen. Die Platten bzw. Körper sind schwer zu handhaben, da sie leicht brechen und weisen praktisch keine ausreichende Schub- und Zugfestigkeit auf.

In EP 0 445 400 A1 bzw. EP 0 515 891 A1 wurde vorgeschlagen, Blähgraphit chemisch zu binden. Abgesehen von sehr aufwendigen Verfahrensführungen werden ebenfalls aufwendige und schwierig zu handhabende Bindemittel wie Phosphorsäure, Aluminiumhydroxid bzw. Ethanolamin vorgeschlagen

Auch wurde vorgeschlagen, Platten aus Blähgraphit mit Kunststoffen zu beschichten, die geeignet sind, mechanische Kräfte aufzunehmen. Auch hierfür ist eine gute Festigkeit des Formkörpers notwendig.

Ausgehend vom vorbeschriebenen Stand der Technik liegt der vorliegenden Erfindung die Aufgabe zugrunde, ein Verfahren zur Herstellung wärmeleitender Formkörper der gattungsgemäßen Art bereitzustellen, welches es ermöglicht, Formkörper mit guter Schub-, Zug- und Druckfestigkeit herzustellen. Darüber hinaus sollen die Formkörper flexibler hinsichtlich der weiteren Ausgestaltung herstellbar sein.

Zur technischen Lösung dieser Aufgabe wird mit der Erfindung vorgeschlagen ein Verfahren mit den Merkmalen des Anspruches 1. Weitere Vorteile und Merkmale ergeben sich aus den Unteransprüchen. Darüber hinaus wird mit der Erfindung ein Formkörper, hergestellt nach dem erfindungsgemäßen Verfahren, vorgeschlagen.

Gemäß der Erfindung wird vorgeschlagen, das für die Wärmeleitung vorgesehene Material in schüttfähigem Zustand, d.h. als Granulat, Faser oder dgl. zu vermischen mit wenigstens einem Mehrkomponentenmaterial. Bei dem Mehrkomponentenmaterial handelt es sich um solche Materialien, die aus wenigstens zwei Komponenten bestehen, die unterschiedliche Schmelztemperaturen aufweisen. Das Mehrkomponentenmaterial liegt in schüttfähiger Form, also als Faser, Granulat oder dgl. vor. Auch kann das Mehrkomponentenmaterial als Ballen vorliegen und wird mit Hilfe von Fasernöffnern ausgebreitet, bevor es mit dem Granulat gemischt wird.

Das lose Gemenge wird dann in eine Form eingebracht, auf die gewünschte Dichte verpresst und durch Wärmeeinleitung wird das Mehrkomponentenmaterial vernetzt. Der sich ergebende Formkörper weist somit die Wärmeleiteigenschaften des wärmeleitenden Materials auf und darüber hinaus die mechanischen Festigkeiten, die sich aus dem Mehrkomponentenmaterial ergeben.

Bikomponentenfasern sind beispielsweise in der Textilindustrie zur Herstellung von Vliesstoffen im Einsatz. Derartige Fasern bestehen aus einem höher schmelzenden Kern und einem niedriger schmelzenden Material aus unterschiedlichen Polymeren. Im Sinne der vorliegenden Anmeldung wird der Begriff "Schmelzen" bzw. "Schmelztemperatur" oberbegrifflich verstanden, d.h., es kann sich dabei auch um die Vernetzungstemperatur eines Kunststoffes handeln. Es ist bekannt, die niedrig schmelzenden oder bei niedrigeren Temperaturen vernetzenden Polymere, beispielsweise Polyester, Polyolefine oder Polyamid wie einen Mantel auszubilden. Die Bikomponentenfasern verbinden sich untereinander, so dass sich ein stabiles dreidimensionales Netz ausbildet. Es sind auch andere Mehrkomponentensysteme bekannt, beispielsweise Side-by-Side-Fasern und dgl. Erfindungsgemäß wird der Mischung Monoaluphosphat beigefügt. Dieses eignet sich in 20 - 60%-iger Ausbildung, vorzugsweise 50%-ig. Gemäß der Erfindung können Fasern mit Materialen unterschiedlicher Schmelzpunkte von z.B. 110°C bis 230°C eingesetzt werden. Darüber hinaus können die Fasern unterschiedliche Dicken haben, etwa 1 bis 15 dtex oder ein 1 bis 15 g pro 10 km Faserlänge. Längen können zwischen 3 und 50mm verwendet werden.

Gemäß einem vorteilhaften Vorschlag der Erfindung werden dem Material mit hoher Wärmeleitfähigkeit zwischen 1 und 15% des Bikomponentenmaterials beigemischt. In vorteilhafter Weise wird gemäß der Erfindung als Material mit hoher Wärmeleitfähigkeit Blähgraphit verwendet.

Gemäß einem Vorschlag der Erfindung werden Blähgraphitfasern eingesetzt, die gemäß einem weiteren Vorschlag gebläht verwendet werden können.

Je nach Verwendung der Bikomponentenfasern werden Formtemperaturen zwischen 110°C und 200°C, vorzugsweise 150°C verwendet.

Die Formzeit liegt zwischen 1 Minute und 1 Stunde, vorzugsweise 10 Minuten. Dabei können erfindungsgemäß entsprechende Pressdrücke ausgeübt werden.

In vorteilhafter Weise können die Oberflächen des Formkörpers, beispielsweise der Platte, beschichtet sein. Als Beschichtungen können gemäß der Erfindung Materialien zur Verbesserung der mechanischen Festigkeit des Formkörpers auf wenigstens eine Oberfläche oder auf mehrere Oberflächen aufgebracht werden. Es kann sich dabei um Metallbleche, Kunststofffolien, Fasermatten, Papier, Magerbeton, Fliesen, Keramikfasermatten und dgl. handeln. Je nach verwendeter Beschichtung kann auch die Biegesteifigkeit des Formkörpers bzw. der Platte verbessert werden. Auch ist es möglich, auf eine oder mehrere Oberflächen Wärmedämmmaterial aufzubringen. Hierdurch kann in vorteilhafter Weise die Wärmeabstrahlung gesteuert werden. Neben den Hauptoberflächen können auch Kantenbereiche beschichtet werden.

Gemäß einem weiteren vorteilhaften Vorschlag der Erfindung werden vor der Fertigstellung des Formkörpers Bauelemente in das Material eingebettet. Dabei kann es sich um Beschläge oder auch Funktionselemente handeln. In vorteilhafter Weise kann ein Rohrregister oder können Rohre eingelegt werden, die später von einem Wärme- oder Kühlmedium durchflossen bzw. durchströmt werden. Auch können Anschlussstücke für Rohre oder Leitungen, elektrische Anschlüsse und dgl. eingebettet werden.

Mit der Erfindung lassen sich mechanisch stabile Körper, insbesondere Platten, mit sehr hoher Wärmeleitfähigkeit herstellen. Da der Volumenanteil der Bikomponentenfasern klein ist, wird die gute Wärmeleitfähigkeit gegenüber herkömmlichen reinen Blähgraphitkörpern kaum beeinträchtigt. Durch die Möglichkeit des Einlegens von Rohren oder des Aufbringens von Beschichtungen vor der Vernetzung lassen sich auf sehr flexible Weise unterschiedlichste Platten und Körper fertigstellen, so dass die Herstellung des Zwischenproduktes wirtschaftlich optimiert ist.

Bei einem Herstellungsbeispiel wurden Blähgraphitfasern bei etwa 250°C gebläht. Anschließend wurde einem Kilogramm geblähtem Graphit ca. 50ml eines 50%-igen Monoaluphosphats und 10% Bikomponentenfaser beigemischt. Dieses Gemisch wurde in eine Plattenform gepresst. Der Pressling wurde bei geschlossener Form unter Pressdruck bei etwa 200°C für eine Stunde ausgehärtet. Die Formplatte ist druckfest und weist eine hervorragende Wärmeleitfähigkeit auf. Die Formplatte wurde anschließend mit einer Metalloberfläche versehen.

Weitere Vorteile und Merkmale der Erfindung ergeben sich aus der folgenden Beschreibung anhand der Figuren. Dabei zeigen:

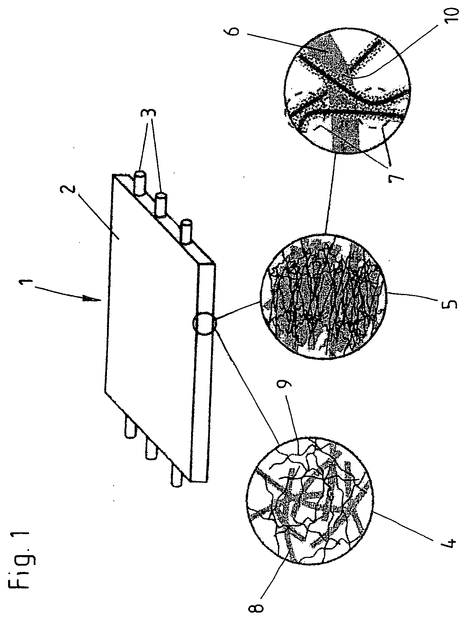

- Fig. 1: eine perspektivische Darstellung eines Formkörpers sowie Nebendarstellungen unterschiedlicher Zustandsformen des Gemenges.

Im gezeigten Ausführungsbeispiel ist der Formkörper 1 eine Platte 2, in welche Rohrleitungen 3 eingebettet sind.

Das Gemenge 4 besteht aus einer losen Mischung von Fasern, nämlich Graphitfasern 8 und Bikomponentenfasern 9. Die Ausrichtung der Fasern 8 und 9 ist rein zufällig.

Nach dem Pressen haben die einzelnen Fasern in dem Gemenge 5 eine Ausrichtung erfahren und sind verdichtet. Das Gemenge 5 wird dann auf die erforderliche Temperatur erwärmt.

Nach dem Erwärmen sind die Graphitfasern 6 durch die miteinander gegenseitig verklebten Bikomponentenfasern fest eingebunden. Die vor dem Verpressen bereits eingelegten Rohre 3 sind in den gesamten Plattenverbund fest eingebunden.

Der sich ergebende Formkörper lässt sich ohne weiteres handhaben und hat die notwendige mechanische Festigkeit für den Einsatz.

Das beschriebene Ausführungsbeispiel dient nur der Erläuterung und ist nicht beschränkend.

### Bezuszeichenliste

- 1: Formkörper
- 2: Platte
- 3: Rohre
- 4: ungepresstes Gemenge
- 5: verpresstes Gemenge
- 6: verschmolzenes Gemenge
- 7: Bikomponentenfasern
- 8: Graphitfäden
- 9: Bikomponentenfasern
- 10: Graphitfäden

## Patentansprüche

1. Verfahren zur Herstellung eines wärmeleitenden Formkörpers mit Wärmeleiteigenschaften mit folgenden Schritten:
a) Herstellen einer Mischung aus wenigstens zwei im schüttfähigen Zustand vorliegenden Bestandteilen in vorgegebenen Mengenverhältnissen, umfassend ein Material mit hoher Wärmeleitfähigkeit und ein weiteres Material aus wenigstens zwei Komponenten mit unterschiedlichem Schmelzpunkt;
b) Einbringen der Mischung in eine Form;
c) Einpressen der Mischung in die gewünschte Form;
d) Erwärmen der Mischung auf eine Temperatur, die größer ist als die niedrigere der unterschiedlichen Schmelztemperaturen; und
e) Abkühlen und Entformen des vernetzten Formkörpers,
wobei die Mischung Monoaluphosphat umfasst.

2. Verfahren nach Anspruch 1, **dadurch gekennzeichnet, dass** als Material mit hoher Wärmeleitfähigkeit Blähgraphitfasern verwendet werden.

3. Verfahren nach Anspruch 2, **dadurch gekennzeichnet, dass** die Blähgraphitfasern gebläht sind.

4. Verfahren nach einem der vorhergehenden Ansprüche, **dadurch gekennzeichnet, dass** als Material Bikomponentenfasern aus wenigstens zwei Komponenten verwendet werden.

5. Verfahren nach einem der vorhergehenden Ansprüche, **dadurch gekennzeichnet, dass** 50%-iges Monoaluphosphat verwendet wird.

6. Verfahren nach einem der vorhergehenden Ansprüche, **dadurch gekennzeichnet, dass** das Material mit hoher Wärmeleitfähigkeit den Grundbestandteil darstellt, dem 1 bis 15 % des Materials aus wenigstens zwei Komponenten beigemischt werden.

7. Verfahren nach einem der vorhergehenden Ansprüche, **dadurch gekennzeichnet, dass** die Mischung auf eine Temperatur zwischen 150°C und 200°C, vorzugsweise auf 150°C erwärmt wird.

8. Verfahren nach einem der vorhergehenden Ansprüche, **dadurch gekennzeichnet, dass** die Mischung für 1 Minute bis 1 Stunde, vorzugsweise 10 Minuten in der Form verbleibt.

9. Verfahren nach einem der vorhergehenden Ansprüche, **dadurch gekennzeichnet, dass** der Formkörper auf wenigstens einer Oberfläche beschichtet wird.

10. Verfahren nach Anspruch 9, **dadurch gekennzeichnet, dass** das Beschichtungsmaterial in die Form eingebracht wird.

11. Verfahren nach einem der vorhergehenden Ansprüche, **dadurch gekennzeichnet, dass** in die Mischung vor dem Vernetzen Beschläge oder Funktionselemente als Bauelemente eingelagert werden.

12. Verfahren nach Anspruch 11, **dadurch gekennzeichnet, dass** in die Mischung Rohre oder ein Rohrregister eingelagert werden/wird.

13. Formkörper hergestellt aus einer Mischung aus wenigstens zwei im schüttfähigen Zustand vorliegenden Bestandteilen in vorgegebenen Mengenverhältnissen, umfassend ein Material mit hoher Wärmeleitfähigkeit und ein weiteres Material aus wenigstens zwei Komponenten mit unterschiedlichem Schmelzpunkt, wobei die Mischung Monoaluphosphat umfasst, wobei der Formkörper eine Platte ist, in welche Rohrleitungen eingebettet sind.

## Claims

1. A method for producing a thermally conductive molded body having thermal conductivity properties, comprising the following steps:
a) preparing a mixture of at least two components present in the pourable state and in predetermined proportions, comprising a material with high thermal conductivity and another material consisting of at least two components having different melting points;
b) introducing the mixture into a mold;
c) pressing the mixture into the desired shape;
d) heating the mixture to a temperature that is greater than the lower one of the different melting temperatures; and
e) cooling and demolding the cross-linked molded body,
wherein the mixture includes monoaluminum phosphate.

2. A method according to claim 1, **characterized in that** exfoliated graphite fibers are used as material having a high thermal conductivity.

3. A method A method according to claim 2, **characterized in that** the exfoliated graphite fibers are inflated.

4. A method according to one of the preceding claims, **characterized in that** bicomponent fibers made of at least two components are used as material.

5. A method according to one of the preceding claims, **characterized in that** 50 % monoaluminum phosphate is used.

6. A method according to one of the preceding claims, **characterized in that** the material having a high thermal conductivity is the base component, to which 1 to 15 % of the material made of at least two components are added.

7. A method according to one of the preceding claims, **characterized in that** the mixture is heated to a temperature comprised between 150°C and 200°C, preferably of 150°C.

8. A method according to one of the preceding claims, **characterized in that** the mixture remains in the mold during a period of 1 minute to 1 hour, preferably of 10 minutes.

9. A method according to one of the preceding claims, **characterized in that** at least one surface of the molded body is coated.

10. A method according to claim 9, **characterized in that** the coating material is introduced into the mold.

11. A method according to one of the preceding claims, **characterized in that** fittings or functional elements are incorporated as structural elements into the mixture before the cross-linking.

12. A method according to claim 11, **characterized in that** tubes or a tube register is/are incorporated into the mixture.

13. A molded body made of a mixture of at least two components present in the pourable state and in predetermined proportions, comprising a material with high thermal conductivity and another material consisting of at least two components having different melting points, wherein the mixture includes monoaluminum phosphate, wherein the molded body is a plate in which pipes are embedded.

## Revendications

1. Procédé de fabrication d'un corps moulé thermoconducteur comprenant des propriétés de conduction thermique, comprenant les étapes suivantes de :
a) préparer un mélange à partir d'au moins deux composants présents à l'état déversable dans des proportions prédéterminées, comprenant un matériau ayant une haute conductibilité thermique et un autre matériau composé d'au moins deux composants présentant des points de fusion différents ;
b) introduire le mélange dans un moule ;
c) presser le mélange dans la forme souhaitée ;
d) chauffer le mélange à une température plus élevée que la température de fusion moins élevée des températures de fusion différentes ; et
e) refroidir et sortir le corps moulé réticulé,
le mélange comprenant du monophosphate d'aluminium.

2. Procédé selon la revendication 1, **caractérisé en ce qu'**on utilise des fibres de graphite expansé en tant que matériau ayant une haute conductibilité thermique.

3. Procédé selon la revendication 2, **caractérisé en ce que** les fibres de graphite expansé sont gonflées.

4. Procédé selon l'une des revendications précédentes, **caractérisé en ce qu'**on utilise des fibres bicomposées d'au moins deux composants en tant que matériau.

5. Procédé selon l'une des revendications précédentes, **caractérisé en ce qu'**on utilise du monophosphate d'aluminium de 50 %.

6. Procédé selon l'une des revendications précédentes, **caractérisé en ce que** le matériau ayant la haute conductibilité thermique représente le composant de base auquel on ajoute 1 à 15 % du matériau composé d'au moins deux composants.

7. Procédé selon l'une des revendications précédentes, **caractérisé en ce qu'**on chauffe le mélange à une température comprises entre 150°C et 200°C, de préférence à 150°C.

8. Procédé selon l'une des revendications précédentes, **caractérisé en ce que** le mélange reste dans le moule pendant 1 minute à 1 heure, de préférence pendant 10 minutes.

9. Procédé selon l'une des revendications précédentes, **caractérisé en ce qu'**au moins une surface du corps moulé est revêtue.

10. Procédé selon la revendication 9, **caractérisé en ce qu'**on introduit le matériau de revêtement dans le moule.

11. Procédé selon l'une des revendications précédentes, **caractérisé en ce qu'**on incorpore des ferrures ou des éléments fonctionnels en tant que éléments de construction dans le mélange avant la réticulation.

12. Procédé selon la revendication 11, **caractérisé en ce qu'**on incorpore des tuyaux ou un registre de tuyaux dans le mélange.

13. Corps moulé fabriqué à partir d'un mélange d'au moins deux composants présents à l'état déversable dans des proportions prédéterminées, comprenant un matériau ayant une haute conductibilité thermique et un autre matériau composé d'au moins deux composants présentant des points de fusion différents, le mélange comprenant du monophosphate d'aluminium, le corps moulé étant une plaque dans laquelle sont intégrés des conduits tubulaires.
